Europäisches Patentamt

European Patent Office

Office européen des brevets

(11) Publication number: **0 228 407**
**B1**

# (12) EUROPEAN PATENT SPECIFICATION

(45) Date of publication of patent specification: **12.09.90**

(21) Application number: **86903693.9**

(22) Date of filing: **06.06.86**

(86) International application number:
**PCT/SE86/00273**

(87) International publication number:
**WO 87/00357 15.01.87 Gazette 87/01**

(51) Int. Cl.⁵: **H 02 B 1/26, H 05 K 5/00**

(54) CABINET OF A PARTICULARLY LIGHT AND STIFF CONSTRUCTION.

(30) Priority: **28.06.85 SE 8503233**

(43) Date of publication of application:
**15.07.87 Bulletin 87/29**

(45) Publication of the grant of the patent:
**12.09.90 Bulletin 90/37**

(84) Designated Contracting States:
**AT BE CH DE FR GB IT LI NL**

(56) References cited:
**none**

(73) Proprietor: **TELEFONAKTIEBOLAGET L M
ERICSSON
S-126 25 Stockholm (SE)**

(72) Inventor: **NILSSON, Gustaf, Birger, Ingemar
Ekvägen 21
S-147 00 Tumba (SE)**

(74) Representative: **Hedberg, Sten Torsten et al
Telefonaktiebolaget L M Ericsson, Patent and
Trademark Department
S-126 25 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Courier Press, Leamington Spa, England.

## Description

Technical Field

The invention described here relates to a cabinet for electrical equipment, implemented in a particularly light and stiff construction.

Background Art

Electrical equipment cabinets are usually made with a framework of steel, covered by walls of sheet metal, of which a part are openable cabinet doors. If there is added the requirement that the cabinet shall withstand large mechanical stresses, inter alia vibrations during an earthquake, the cabinet will be heavy, especially if it is large, with a height of about 2 m. If there is still further a requirement that the cabinet shall be transported with associated electric equipment in place, the cabinet must be made even stronger and heavier. This means that all the requirements made on the cabinet will be so contradictory that they cannot be met.

Disclosure of Invention

The object of the present invention is to provide a cabinet for electrical equipment, implemented such that it is sufficiently light to be transported with associated electrical equipment in place, while being at the same time so stiff that it meets the requirements of resistance to specified mechanical stresses.

The cabinet is characterized as disclosed in the characterizing portions of the following claims.

Brief Description of Drawings

An embodiment of a cabinet in accordance with the invention is described as an example in the following, with reference to the accompanying drawings, where

Figure 1 is a general elevational view of the cabinet,

Figure 2 illustrates one end wall of the cabinet assembled to two frame parts, and

Figure 3 is a cross section of the end wall assembled to a frame part.

Best Mode for Carrying Out The Invention

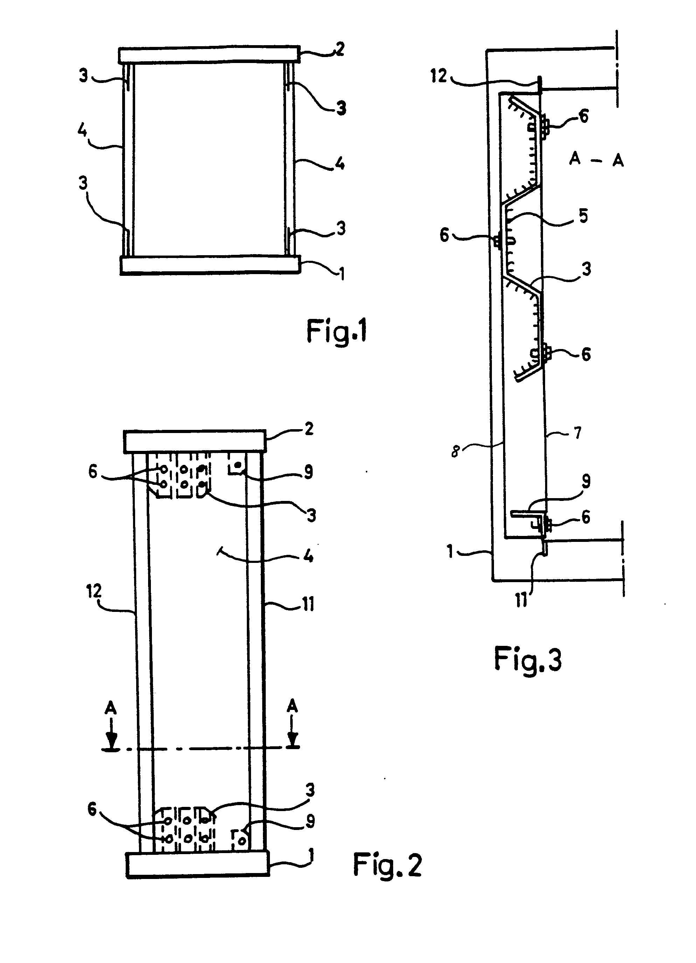

The exemplifying cabinet in accordance with the invention, as will be seen from Figure 1, is fabricated with a rectangular flat frame part 1 as its bottom, with a frame part 2 of the same kind as frame part 1 as its top. Upstanding fastening cleats 3 are welded to each short side of both frame parts 1, 2 at right angles to the plane of the respective part. Two box-section end walls 4, which are open at bottom and top, are placed over, and removably fastened to the cleats 3.

As will be seen from Figures 2 and 3, the cleats 3 are made from steel sheet pressed into a corrugated configuration and are welded to the frame parts 1, 2 with a weld 5 such that the direction of the corrugation is at right angles to the plane of the frame part. In the case illustrated here there are 6 captive nuts attached to each cleat 3. In alternative cabinet embodiments a different number of captive nuts is used. Both box-section end walls 4 are made up from an interior steel sheet 7 and an exterior steel sheet 8, which are welded together along the long sides of the wall. After being placed over the fastening cleats 3, the end walls 4 are screwed to them through both the interior sheet and the exterior sheet using the captive nuts attached to the cleats.

A locating angle cleat 9 is welded to each of the short sides of the frame parts and is directed in the same direction as the cleats 3. The angle cleats 9 are disposed such as to bear against one narrow side of the end wall 4 to locate the end wall on the respective parts 1 and 2. The locating cleat 9 is also provided with a captive nut for a screw passing through the interior sheet 7 of the end wall.

The long sides of the box-section end walls are formed as flanges 11, 12, and to these there are fastened corner posts for supporting cabinet doors etc as required. The corner posts and the cabinet doors are not shown on the drawing since they do not constitute any part of the invention.

As will be seen from Figure 3, the weld 5 is run along the cleat 3 so that it does not interfere with the end wall 4 bearing against the frame part 1, 2.

As an example of the implementation of a cabinet it may be mentioned that its height is 2,100 mm, width 1,200 mm and depth 400 mm. The cleats 3 are made from 2,5 mm thick steel sheet and the end wall 4 is made from steel sheet with a thickness of 1 mm on the inside and 1,5 mm on the outside. Other dimensions are applicable to alternative forms of cabinet.

Cabinets in accordance with the invention are sufficiently light to enable their being transported with all their associated electrical equipment in place, and sufficiently strong to withstand specified mechanical stresses, inter alia vibrations caused by earthquakes.

## Claims

1. A cabinet for such as electrical equipment, fabricated as a particularly light and stiff structure, characterized by a flat frame part (1) as bottom, and a frame part (2) of the same kind as top, there being upstanding fastening cleats (3) rigidly attached to the short sides of the frame parts and at right angles thereto, and by two box-section end walls (4), open at top and bottom, which are placed over the cleats (3) and removably fastened thereto.

2. Cabinet as claimed in claim 1, characterized by the fastening cleats (3) being made of corrugated sheet material said corrugations being directed at right angles to the plane of the frame parts 1, 2 and engaging against the interior sheet (7) of the box-section end wall as well as its exterior sheet (8).

## Patentansprüche

1. Gräteschrank, insbesondere für elektrische Geräte, der als eine besonders leichte und starre Anordnung ausgebildet ist, gegekennzeichnet durch einen flachen Rahmenteil (1) als Boden und einen flachen Rahmenteil (2) der gleichen Art als Oberseite, mit aufwärts gerichteten Befestigungsklampen (3), die starr an den kurzen Seiten der Rahmenteile befestigt sind und im rechten Winkel hierzu verlaufen, und mit zwei, einen kastenförmigen Querschnitt aufweisenden Stirnwänden (4), die an der Oberseite und am Boden offen sind und die über die Befestigungsklampen (3) gelegt sind und an diesen lösbar befestigt sind.

2. Geräteschrank nach Anspruch 1, dadurch gekennzeichnet, dass die Befestigungsklampen (3) aus Wellplatten bestehen, deren Wellungen rechtwinklig zur Ebene der Rahmenteile (1, 2) verlaufen und an der Innenwand (7) der einen kastenförmigen Querschnitt aufweisenden Stirnwand wie auch an der Aussenwand (8) derselben anliegen.

**Revendications**

1. Armoire destinée, par exemple, à du matériel électrique, fabriquée en une structure particuliérement légère et rigide, caractérisée par une pièce de châssis plate (1) en tant que partie inférieure, et une pièce de châssis (2) du même type en tant que partie supérieure, des tasseaux verticaux (3) de fixation étant reliés rigidement aux côtés courts des pièces de châssis et perpendiculairement à celles-ci, et par deux parois extrêmes (4) de section en caisson, ouvertes à leurs parties supérieure et inférieure, qui sont placées sur les tasseaux (3) et fixées de façon amovible à ceux-ci.

2. Armoire selon la revendication 1, caractérisée en ce que les tasseaux (3) de fixation sont réalisés en tôle ondulée, lesdites ondulations étant perpendiculaires au plan des pièces de châssis (1, 2) et s'appliquant contre la tôle intérieure (7) de la paroi extrême de section en caisson ainsi que contre sa tôle extérieure (8).

Fig.1

Fig.2

Fig.3

A — A